# EUROPEAN PATENT APPLICATION

(11) **EP 4 794 283 A1**
(43) Date of publication of application: **19.08.2026**
(21) Application number: 25157421.6
(22) Date of filing: 12.02.2025
(51) Int. Cl.: H04L 41/069, H04L 41/149, H04L 43/0817, H04L 41/16

(54) **METHOD AND SYSTEM FOR MAINTAINING A HARDWARE COMPONENT OF A CENTRAL OFFICE OF A TELECOMMUNICATION NETWORK**

(71) Applicant: Deutsche Telekom AG, 53113 Bonn (DE)
(72) Inventor: SCHRAUB, Stefan, 61239 Ober-Mörlen (DE); NÖCKEL, Philipp, 53721 Siegburg (DE)
(74) Representative: RDL Patentanwälte PartG mbB

(57) **Abstract**

A method for maintaining a hardware component, wherein a hardware component of a central office, CO, of a telecommunication network is maintained, a maintenance system for an operation support system of a telecommunication network and a computer program product.

## Description

The invention relates to a method for maintaining a hardware component, wherein a hardware component of a central office, CO, of a telecommunication network is maintained. The invention further relates to a maintenance system for an operation support system of a telecommunication network and a computer program product.

Methods for maintaining a hardware component are known and used for increasing a lifetime of the hardware component. The hardware component is required for a proper function of the CO, the CO providing a large number of users with communication connections. The longer the lifetime of the hardware component, the longer is an up-time of the CO, i.e., the more reliable is a proper function.

The lifetime of the hardware component may be adversely affected by a high operational temperature, a malfunction or failure of a cooling fan or a congested filter of the hardware component to name only a few. Maintaining the hardware component, hence, usually comprises continually monitoring the operational temperature and visually inspecting a function of the cooling fan and degree of congestion of the filter.

The visual inspection and an eventual replacement of the cooling fan or the filter may be caused by malfunction or a failure of the hardware component, an alert raised by the hardware component, a manufacturer recommendation and/or a maintenance schedule. However, on the one hand, the visual inspection caused by the malfunction, failure or the alert may occur late, thus, allowing the lifetime of the hardware component to be adversely affected. On the other hand, the periodic visual inspection is tedious and may often be a waste of time, e.g., in case the visual inspection reveals the cooling fan to function properly and the filter to be permeable.

It is, therefore, an object of the invention to provide a method for maintaining a hardware component which efficiently and reliably increases a lifetime of the hardware component. Further objects of the invention are to provide a maintenance system for an operation support system, OSS, of a telecommunication network and a computer program product.

A first aspect of the invention is a method for maintaining a hardware component, wherein a hardware component of a central office, CO, of a telecommunication network is maintained. Maintaining the hardware component is a necessary basic task to accomplish in favor of the CO working reliably. Maintaining comprises monitoring and servicing.

According to the invention, a network service operation, NSO, center of an operation support system, OSS, of the telecommunication network permanently receives health data related to a hardware component of a central office, CO, of the telecommunication system and stores the received health data in a respective database of the NSO center, and a maintenance system of the OSS retrieves health data related to the hardware component from the respective database of the NSO center and automatically reacts to a risk of failure of the hardware component, the risk of failure being determined depending on the stored health data. The inventive method relies on the maintenance system evaluating the health data stored in databases of the NSO center. The evaluation of the health data not only reveals a current failure or malfunction of the hardware component but rather allows for predicting a future failure or malfunction of the hardware component. Herein, the malfunction shall be understood an unsufficient function while the failure shall be understood a complete loss of the function.

The maintenance system avoids any unnecessary maintenance activity accomplished by a service person. Hence, the hardware component is maintained more efficiently. A manufacturer of the hardware component may accept the inventive method as equivalent with a rigid manufacturer recommendation for periodically maintaining the hardware component even without any indication of a necessity.

A current value of an operational parameter of the hardware component, an alert raised by the hardware component and/or a log entry created by the hardware component is preferably retrieved as the health data. The listed sources of health data are exemplary. The invention is not restricted to the listed sources.

Advantageously, a current value of an operational parameter of a second hardware component, an alert raised by the second hardware component and/or a log entry created by the second hardware component is retrieved as the health data, the second hardware component being arranged adjacent to the hardware component. Each adjacent second hardware component may adversely affect the hardware component. Accordingly, taking into account health data of the second hardware component improves a precision of the determined reaction and, hence, increases a reliability of the inventive method.

A temperature, a power consumption, a rotational speed of a cooling fan and/or a load of the hardware component is exemplarily measured as the operational parameter. The temperature indicates an operational state of the hardware component. The rotational speed of the cooling fan corresponds to a cooling effectiveness of the cooling fan. The load of the hardware corresponds to a heat loss of the hardware.

A sensor may measure the operational parameter of the hardware component and transmit a sensor signal to the NSO, the sensor signal indicating the value of the measured operational parameter. The operational parameter may be measured by a sensor of the hardware component or a sensor of the CO, e.g., a sensor arranged on a rack the hardware component is installed in.

In an embodiment, automatically reacting comprises creating a maintenance ticket for a service person, reducing a temperature of an air surrounding the hardware component, shutting down an obsolete function of the hardware component and/or reducing a load of the hardware component. The maintenance ticket causes a service person to service the hardware component. The air temperature may be reduced by controlling an air-conditioning at the CO, e.g., within a rack the hardware component is installed in. Shutting down obsolete, i.e., unused functions or generally reducing the load reduces a heat loss of the hardware component.

Alternatively or additionally, automatically reacting may comprise determining a quantity of spare parts to be ordered and/or ordering a spare part for the hardware component with a spare part supplier. The automatic determination and/or order of spare parts creates a stock and ensures an availability of spare parts and, hence, reduces down-times of the hardware component due to a malfunction or a failure.

Particularly, a cooling fan or a filter is ordered as the spare part. Deficient cooling fans and congested filters often cause malfunctions or failures of hardware components due to an over-temperature and, hence, have to be replaced quite often in order to ensure a proper function of the hardware component.

The maintenance system may log the automatic reaction and/or a success of the automatic reaction. The logging of reactions and corresponding successes provides an automatic documentation of the maintenance. The automatic documentation further increases an efficiency of the maintenance method.

The risk of failure is advantageously determined depending on a position of the hardware component. The position of the hardware component reveals any external impairment of the hardware component, e.g., a heat load caused by a neighboring hardware component.

In other embodiments, a plurality of hardware components is maintained simultaneously and/or the NSO center receives the health data from a central office, CO, of the telecommunication network. Ideally, each hardware component of the CO or even a plurality of COs is maintained according to the invention.

A second aspect of the invention is a maintenance system for an operation support system, OSS, of a telecommunication network. The maintenance system may be implemented as a desktop application or as a server application. The maintenance system may be integrated in an NSO center of the OSS or in a network management system, NMS. The maintenance system is configured for being part of the OSS.

According to the invention, the maintenance system comprises a data interface for receiving health data related to a hardware component of a central office, CO, of the telecommunication network from a database of a network operation system, NSO, center, of the OSS and a reaction interface for providing a determined reaction of the maintenance system wherein the maintenance system is configured for carrying out a method according to an embodiment of the invention in cooperation with the NSO center for maintaining the hardware component.

The system may further comprise a computing device with a process module for determining a risk of failure of the hardware component depending on the stored health data, an application programming interface, API, for providing the determined risk of failure and a reaction module for determining a reaction depending on the provided risk of failure. The process module is configured for evaluating the stored health data and calculating the risk of failure from the evaluated health data. The reaction module is configured for deriving the reaction from the calculated risk of failure.

Preferably, the reaction module comprises an artificial neural network. The artificial neural network is trained for recognizing suspicious patterns in a large amount of stored health data and very efficiently and reliably recognizes patterns indicating a current or future malfunction or failure of the hardware component. The artificial neural network recognizes anomalies within the stored health data and contextually checks the recognized anomalies. Moreover, a corresponding capability of the artificial neural network permanently improves during operation of the maintenance system.

A third aspect of the invention is a computer program product, comprising a digital storage medium with a program code. The digital storage medium is chosen from the group comprising a compact disk, CD, a digital versatile disk, DVD, a hard disk, HD, a random access memory, RAM, chip, a universal serial bus, USB, stick, a cloud storage and the like.

According to the invention, the program code causes a computing device to carry out a method according to an embodiment of the invention as the maintenance system in cooperation with the network service operation, NSO, center of the operation support system of the telecommunication network when being executed by a processor of the computing device. The computer program product allows for the computing device cooperating with the NSO center an efficient and reliable maintenance of the hardware component. Thus, an up-time of a central office, CO, of the communication device is increased.

It is an essential advantage of the inventive method that a lifetime of a hardware component of a central office, CO, of a telecommunication network is efficiently and reliably increased. Thus, an up-time of the CO is increased and a proper function of the telecommunication network is prolonged.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.

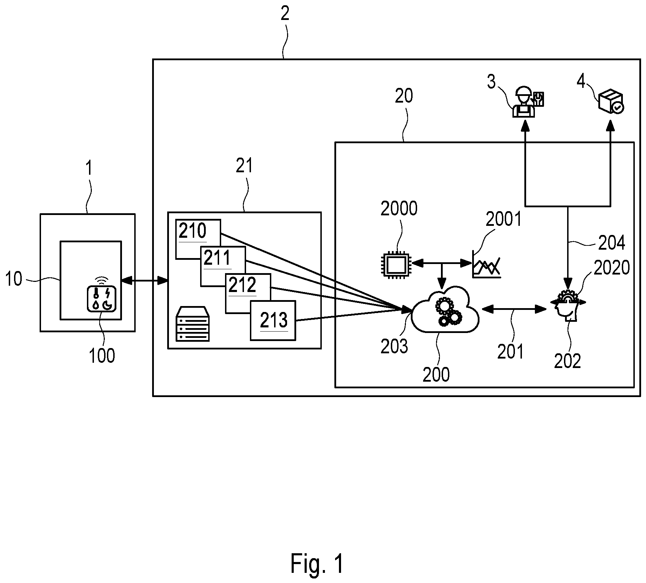

- Fig. 1: schematically shows a maintenance system according to an embodiment of the invention for an operation support system of a telecommunication network.

Fig. 1 schematically shows a maintenance system 20 according to an embodiment of the invention for an operation support system, OSS, 2 of a telecommunication network. The maintenance system 20 comprises a data interface 203 for receiving health data related to a hardware component 10 of a central office, CO, 1 of the telecommunication network from a database 210, 211, 212, 213 of a network operation system, NSO, center 21 of the OSS 2. Further the maintenance system 20 comprises a reaction interface 204 for providing a determined reaction of the maintenance system 20.

The maintenance system 20 is configured for carrying out a method according to an embodiment of the invention as follows in cooperation with the NSO center 21 for maintaining the hardware component 10.

The maintenance system 20 may comprise a computing device with a process module 200 for determining a risk of failure of the hardware component 10 depending on the stored health data, an application programming interface, API, 201 for providing the determined risk of failure and a reaction module 202 for determining a reaction depending on the provided risk of failure. For determining the risk of failure, the process module 200 may be configured for an evaluation 2000 of the stored health data and for a calculation 2001 of the risk of failure based on the evaluated health data. The reaction module 202 favorably comprises an artificial neural network 2020.

The maintenance system 20 may be implemented by means of a computer program product comprising a digital storage medium with a program code. The program code causes the computing device to carry out the inventive method for maintaining the hardware component 10 as the maintenance system 20 in cooperation with the network service operation, NSO, center 21 of the operation support system, OSS, 2 of the telecommunication network when being executed by a processor of the computing device.

The maintenance system 20 may be connected to a service person 3, a spare part supplier 4 and the CO 1.

The network service operation, NSO, center 21 of the operation support system, OSS, 2 of a telecommunication network permanently receives health data related to a hardware component 10 of a central office, CO, 1 of the telecommunication system. The NSO center 21 may receive the health data from the central office, CO, 1 of the telecommunication network.

The NSO center 21 stores the received health data in a respective database 210, 211, 212, 213 of the NSO center 21. The respective database may be one of a hardware database 210, a log database 211, a sensor database 212 and an alert database 213.

The maintenance system 20 of the OSS 2 retrieves health data related to the hardware component 10 from the respective database 210, 211, 212, 213 of the NSO center 21. A current value of an operational parameter of the hardware component 10, an alert raised by the hardware component 10 and/or a log entry created by the hardware component 10 may be retrieved as the health data. Exemplarily, a temperature, a power consumption, a rotational speed of a cooling fan and/or a load of the hardware component 10 is measured as the operational parameter. A sensor 100 may measure the operational parameter of the hardware component 10 and transmit a sensor signal to the NSO center 21, the sensor signal indicating the value of the measured operational parameter.

Additionally, a current value of an operational parameter of a second hardware component (not shown), an alert raised by the second hardware component and/or a log entry created by the second hardware component is retrieved as the health data, the second hardware component being arranged adjacent to the hardware component 10.

The maintenance system 20 automatically reacts to a risk of failure of the hardware component 10, the risk of failure being determined depending on the stored health data. The risk of failure may be determined additionally depending on a position of the hardware component 10.

Automatically reacting comprises creating a maintenance ticket for the service person 3, reducing a temperature of an air surrounding the hardware component 10, shutting down an obsolete function of the hardware component 10 and/or reducing a load of the hardware component 10. Automatically reacting may also comprise determining a quantity of spare parts to be ordered and/or ordering a spare part for the hardware component 10 with the spare part supplier 4. Exemplarily, a cooling fan or a filter is ordered as the spare part.

The maintenance system 20 may log the automatic reaction and/or a success of the automatic reaction.

Preferably a plurality of hardware components 10 is maintained simultaneously.

### Reference Numerals

- 1: central office, CO
- 10: hardware component
- 100: sensor
- 2: operation support system, OSS
- 20: maintenance system
- 200: process module
- 2000: evaluation
- 2001: calculation
- 201: application programming interface, API
- 202: reaction module
- 2020: artificial neural network
- 203: data interface
- 204: reaction interface
- 21: network system operation, NSO, center
- 210: database
- 211: database
- 212: database
- 213: database
- 3: service person
- 4: spare part supplier

## Claims

1. A method for maintaining a hardware component (10), wherein
- a network service operation, NSO, center (21) of an operation support system, OSS, (2) of a telecommunication network permanently receives health data related to a hardware component (10) of a central office, CO, (1) of the telecommunication system and stores the received health data in a respective database (210, 211, 212, 213) of the NSO center (21);
- a maintenance system (20) of the OSS (2) retrieves health data related to the hardware component (10) from the respective database (210, 211, 212, 213) of the NSO center (21) and automatically reacts to a risk of failure of the hardware component (10), the risk of failure being determined depending on the stored health data.

2. The method according to claim 1, wherein a current value of an operational parameter of the hardware component (10), an alert raised by the hardware component (10) and/or a log entry created by the hardware component (10) is retrieved as the health data.

3. The method according to claim 1 or 2, wherein a current value of an operational parameter of a second hardware component, an alert raised by the second hardware component and/or a log entry created by the second hardware component is retrieved as the health data, the second hardware component being arranged adjacent to the hardware component (10).

4. The method according to claim 2 or 3, wherein a temperature, a power consumption, a rotational speed of a cooling fan and/or a load of the hardware component (10) is measured as the operational parameter.

5. The method according to claim 4, wherein a sensor (100) measures the operational parameter of the hardware component (10) and transmits a sensor signal to the NSO center (21), the sensor signal indicating the value of the measured operational parameter.

6. The method according to one of claims 1 to 5, wherein automatically reacting comprises creating a maintenance ticket for a service person (3), reducing a temperature of an air surrounding the hardware component (10), shutting down an obsolete function of the hardware component (10) and/or reducing a load of the hardware component (10).

7. The method according to one of claims 1 to 6, wherein automatically reacting comprises determining a quantity of spare parts to be ordered and/or ordering a spare part for the hardware component (10) with a spare part supplier (4).

8. The method according to claim 7, wherein a cooling fan or a filter is ordered as the spare part.

9. The method according to one of claims 1 to 8, wherein the maintenance system (20) logs the automatic reaction and/or a success of the automatic reaction.

10. The method according to one of claims 1 to 9, wherein the risk of failure is determined depending on a position of the hardware component (10).

11. The method according to one of claims 1 to 10, wherein a plurality of hardware components (10) is maintained simultaneously and/or the NSO center (21) receives the health data from a central office, CO, (1) of the telecommunication network.

12. A maintenance system (20) for an operation support system, OSS, (2) of a telecommunication network, comprising a data interface (203) for receiving health data related to a hardware component (10) of a central office, CO, (1) of the telecommunication network from a database (210, 211, 212, 213) of a network operation system, NSO, center (21) of the OSS (2) and a reaction interface (204) for providing a determined reaction of the maintenance system (20) wherein the maintenance system (20) is configured for carrying out a method according to one of claims 1 to 11 in cooperation with the NSO center for maintaining the hardware component (10).

13. The system according to claim 12, comprising a computing device with a process module (200) for determining a risk of failure of the hardware component (10) depending on the stored health data, an application programming interface, API, (201) for providing the determined risk of failure and a reaction module (202) for determining a reaction depending on the provided risk of failure.

14. The system according to claim 12 or 13, wherein the reaction module (202) comprises an artificial neural network (2020).

15. A computer program product, comprising a digital storage medium with a program code, the program code causing a computing device to carry out a method according to one of claims 1 to 11 as the maintenance system (20) in cooperation with the network service operation, NSO, center (21) of the operation support system, OSS, (2) of the telecommunication network when being executed by a processor of the computing device.
